# EUROPEAN PATENT SPECIFICATION

(11) **EP 3 366 906 B1**
(45) Date of publication and mention of the grant of the patent: **18.09.2019**
(21) Application number: 18158698.3
(22) Date of filing: 26.02.2018
(51) Int. Cl.: F02F 1/42, F02B 31/04, F01L 3/06, F01L 3/22

(54) **INTERNAL COMBUSTION ENGINE**
VERBRENNUNGSMOTOR
MOTEUR À COMBUSTION INTERNE

(30) Priority: 28.02.2017 JP 2017037111
(43) Date of publication of application: 29.08.2018
(73) Proprietor: Toyota Jidosha Kabushiki Kaisha, Aichi-Ken 471-8571 (JP)
(72) Inventor: YARINO, Motonari, Aichi-ken, 471-8571 (JP)
(74) Representative: D Young & Co LLP

(56) References cited:
- JP-A- 2001 173 513
- JP-U- H0 214 405
- US-A- 2 921 571
- US-A- 4 438 740

## Description

### BACKGROUND OF THE INVENTION

### 1. Field of the Invention

The invention relates to an internal combustion engine and, more particularly, to an internal combustion engine provided with a cylinder head incorporating a valve seat.

### 2. Description of Related Art

Japanese Unexamined Patent Application Publication No. 2016-180359 (JP 2016-180359 A) discloses an internal combustion engine. The internal combustion engine is provided with a cylinder head that has an intake port. An intake opening portion allowing the intake port to communicate with a combustion chamber is disposed in the cylinder head. A valve seat is incorporated into the intake opening portion. An intake valve of the internal combustion engine is configured to be seated on the valve seat when the intake valve is closed.

The valve seat is disposed in a circular shape such that the intake valve can be appropriately seated. A thick portion for the installation of the valve seat is disposed in the vicinity of the intake opening portion of the cylinder head. The valve seat is incorporated into the cylinder head without being restricted by the shape of the intake port on the thick portion.

Once the intake valve is opened during an operation of the internal combustion engine, a gap is generated between the valve seat and a valve body of the intake valve. Intake air enters the combustion chamber through the gap after moving into the intake port. At that time, some of the intake air enters an outer peripheral side of the combustion chamber from a gap formed on the front side of a valve stem, that is, a gap formed on an outer peripheral side of the combustion chamber (hereinafter, referred to as an "outer peripheral side gap"). The rest of the intake air enters the combustion chamber from a gap formed in the back of the valve stem, that is, a gap formed on a central side of the combustion chamber (hereinafter, referred to as a "central side gap").

The intake air entering from the central side gap generates a tumble flow in the combustion chamber. The intake air entering the combustion chamber from the outer peripheral side gap acts to minimize the tumble flow. In order to further increase the combustibility of an air-fuel mixture, it is desirable to generate a large tumble flow in the combustion chamber. Accordingly, in the internal combustion engine, it is desirable that the amount of the intake air passing through the outer peripheral side gap when the intake valve is open is small.

In JP 2016-180359 A, a configuration is disclosed in which a steepened edge portion is disposed in an end portion of the intake port on the outer peripheral side of the combustion chamber. The edge portion is disposed such that an inner wall of the intake port guiding the flow of the intake air suddenly disappears.

When the inner wall of the intake port suddenly disappears, the intake air is likely to continue to move straight while maintaining the direction of the previous flow as it is. When the inner wall of the intake port forms a gentle curve, the intake air is likely to change its movement direction along the curve. Accordingly, when the curve as described above is formed on the outer peripheral side of the combustion chamber, the amount of the intake air heading for the outer peripheral side gap along the curve increases.

When the edge portion is disposed, the intake air reaching the outer peripheral side of the combustion chamber moves in the direction of the valve stem by moving straight as it is and is unlikely to move in the direction of the outer peripheral side gap. For this reason, with the edge portion, a flow in the direction that hinders the tumble flow is unlikely to be generated in the combustion chamber. Accordingly, with the configuration disclosed in JP 2016-180359 A, the tumble flow can be efficiently generated in the combustion chamber of the internal combustion engine.

JP H02 14405 U (30 January 1990) describes an intake system for an internal combustion engine.

JP 2001 173513 A (26 June 2001) describes an intake system of an engine and its valve seat.

### SUMMARY OF THE INVENTION

Particular aspects of the invention are defined in the appended claim.

In the internal combustion engine disclosed in JP 2016-180359 A, the edge portion needs to be formed in the end portion of the intake port such that the edge portion does not interfere with the valve seat. Accordingly, in the internal combustion engine, the edge portion of the intake port is disposed at a position apart from the valve seat. More specifically, the edge portion is disposed at a position further inside than an inner peripheral surface of the valve seat and more away from the combustion chamber than the position of the valve seat.

The effective opening area of the intake port decreases as the edge portion is shifted further inside than the inner peripheral surface of the valve seat. Accordingly, the internal combustion engine disclosed in JP 2016-180359 A is unlikely to achieve intake efficiency commensurate with the size of the valve seat.

As the edge portion is increasingly separated from the combustion chamber, the movement direction of the intake air is likely to increasingly spread until the intake air reaches the combustion chamber after passing through the edge portion. As a result, the amount of the intake air moving in the direction toward the outer peripheral side gap is likely to increase. Accordingly, the internal combustion engine disclosed in JP 2016-180359 A generates an air flow in a direction hindering the tumble flow to some extent. In this regard, the structure described above does not always generate the tumble flow in an optimal condition.

The invention provides an internal combustion engine capable of realizing intake efficiency commensurate with the size of a valve seat and effectively generating a tumble flow at the same time.

The invention relates to an internal combustion engine including a cylinder head provided with an intake opening portion connected to a combustion chamber and an intake port connected to the intake opening portion, an annular valve seat provided with a circular seating portion and a circular outer peripheral surface and installed on a combustion chamber side of the intake opening portion from, and an intake valve seated on the seating portion when the intake valve is closed. The valve seat is provided with a port surface and a seat surface having end portions in contact with each other on an outer peripheral side of the combustion chamber. The port surface is continuously connected to a wall surface of the intake port and the port surface has a normal vector having a direction away from the combustion chamber. The seat surface is formed to include the seating portion and the seat surface has a normal vector having a direction approaching the combustion chamber. The center of the outer peripheral surface of the valve seat is offset from the center of the seating portion to the port surface side. The port surface includes a planar portion with no curvature and the edge portion includes an end portion of the planar portion.

In the internal combustion engine according to the invention, a linear edge portion is formed at a part where the port surface and the seat surface are in contact with each other.

In an internal combustion engine, the valve seat may have a top plate surface on a side opposite to the combustion chamber side, a part of the port surface which is being in contact with the seat surface (32) is positioned closer to an inner peripheral side than an inner peripheral end of the top plate surface in a first region where the valve seat is provided with the port surface, and the inner peripheral end of the top plate surface may be a part positioned on an innermost peripheral side of the valve seat in a second region where the valve seat is not provided with the port surface.

According to the invention, intake air heads for the intake opening portion through the intake port when the intake valve is open. Some of the intake air enters the outer peripheral side of the combustion chamber from a gap formed on the front side of a valve stem with respect to the movement direction, that is, an outer peripheral side gap formed on the outer peripheral side of the combustion chamber. The rest of the intake air enters the combustion chamber from a gap formed in the back of the valve stem, that is, a central side gap formed on a central side of the combustion chamber. According to the invention, the wall surface of the intake port is continuously connected to the port surface of the valve seat on the outer peripheral side of the combustion chamber. The end portion of the port surface is in contact with the seat surface. The normal vector of the seat surface is significantly different from the normal vector of the port surface, and thus the wall surface present along the flow of the intake air suddenly disappears in the end portion of the port surface. Accordingly, the intake air passing through the end portion of the port surface moves straight as it is and the amount
of the intake air flowing into the combustion chamber from the outer peripheral side gap is extremely small. As a result, according to the invention, a large tumble flow can be generated in the combustion chamber.

According to the invention, the position where the wall surface present along the flow of the intake air suddenly disappears is formed in an opening of the valve seat formed in an annular shape. According to the configuration described above, the effective opening area of the intake port is equal to the opening area of the valve seat. Therefore, according to the invention, high intake efficiency can be obtained with respect to the size of the valve seat.

According to the invention, the shape of the valve seat is not restricted by the shape of the intake port on the central side of the combustion chamber. On the outer peripheral side of the combustion chamber, in contrast, the port surface needs to be formed, and thus the shape of the valve seat needs to be similar to the shape of the wall surface of the intake port. Accordingly, for adequate rigidity to be ensured for the entire valve seat, it is desirable that a machining margin larger than at a part positioned on the central side of the combustion chamber is ensured for a part of the valve seat positioned on the outer peripheral side of the combustion chamber. According to the invention, the center of the outer peripheral surface of the valve seat is offset from the center of the seating portion, and thus a machining margin can be appropriately ensured on the port surface side. With the configuration described above, adequate rigidity can be ensured for the entire valve seat after the port surface is formed.

According to the invention, the intake air flowing through the intake port heads for the intake opening portion through the linearly expanding edge portion. Therefore, according to the invention, a flow of the intake air to the outer peripheral side gap side can be prevented in a wide region on the outer peripheral side of the combustion chamber.

According to the invention, the edge portion is disposed in the end portion of the planar portion of the port surface. When the port surface is curved, the intake air flowing through the intake port is likely to concentrate in the middle of the curvature. According to the invention, the concentration of the intake air described above can be avoided and a wide tumble flow can be generated in the combustion chamber.

According to the invention, the valve seat is a structure in which the port surface and the seat surface are provided on the outer peripheral side of the combustion chamber and the top plate surface has the minimum diameter on the central side of the combustion chamber. The aspect of the invention can be appropriately realized with the structure described above.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is an enlarged view of a main part of a first embodiment of the invention;
FIG. 2 is a cross-sectional view obtained by a cylinder head as a whole used in the first embodiment of the invention being cut along II-II plane illustrated in FIG. 1;
FIG. 3 is a cross-sectional view in which the configuration illustrated in FIG. 1 is illustrated by III-III arrow view illustrated in FIG. 1;
FIG. 4 is a diagram showing a flow of intake air realized by the configuration illustrated in FIG. 1;
FIG. 5 is a diagram showing a flow of intake air occurring in a comparative example in contrast to the configuration of the first embodiment of the invention;
FIG. 6 is a diagram showing intake characteristics of the first embodiment of the invention and intake characteristics of the comparative example illustrated in FIG. 5 in contrast to each other; and
FIG. 7 is a diagram in which cross sections obtained by the configuration of the first embodiment of the invention being cut along the one-dot chain lines in FIG. 3 to which 0, 4, 8, and 10 are respectively attached are shown in VII-VII arrow views.

### DETAILED DESCRIPTION OF EMBODIMENTS

### First Embodiment

### Configuration of First Embodiment

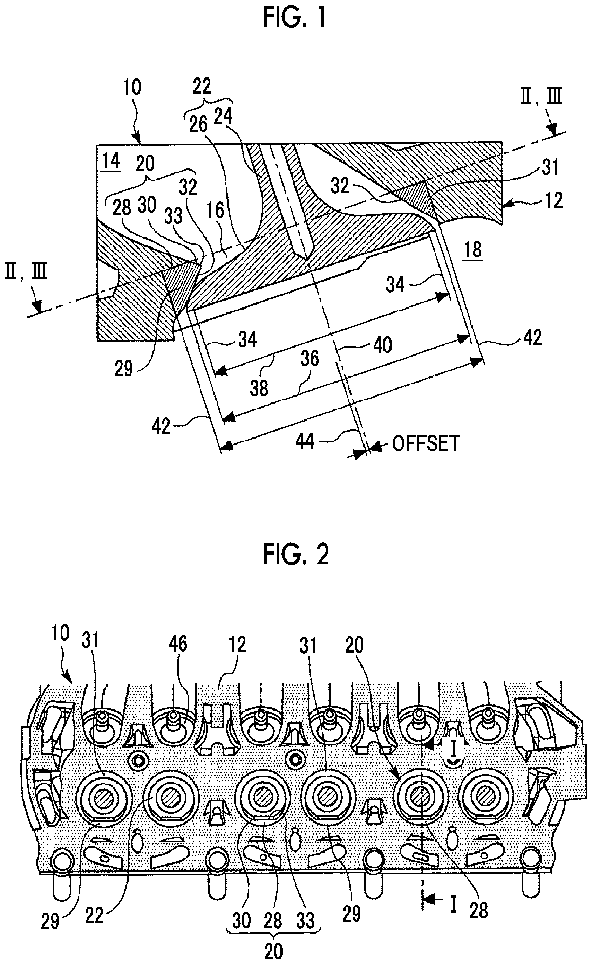

FIG. 1 is a cross-sectional view of a main part of a cylinder head 12 of an internal combustion engine 10 according to a first embodiment of the invention. An intake port 14 of the cylinder head 12 is illustrated in FIG. 1. The intake port 14 communicates with a combustion chamber 18 of the internal combustion engine 10 via an intake opening portion 16.

A valve seat 20 is installed in the intake opening portion 16. Specifically, the valve seat 20 is press-fitted into an installation place disposed in the intake opening portion 16. Before the valve seat 20 is press-fitted into the intake opening portion 16, the valve seat 20 is shaped such that the valve seat 20 is called an annular rotating body. Hereinafter, the rotating body will be referred to as a "seat coarse material". Likewise, the vicinity of the intake port 14 that is yet to undergo a treatment such as port polishing will be referred to as a "port coarse material".

The seat coarse material is the rotating body, and thus the seat coarse material can be press-fitted into the port coarse material without angular alignment. After the seat coarse material is press-fitted into the port coarse material, the seat coarse material and the port coarse material are simultaneously processed in the same process. By the processing method described above, a wall surface of the valve seat 20 and a wall surface of the intake port 14 can be smoothly connected to each other without a step.

The intake port 14 and the valve seat 20 after the execution of various types of cutting processing are illustrated in FIG. 1. An intake valve 22 is incorporated into the internal combustion engine 10 such that the intake valve 22 is seated on the valve seat 20 when the intake valve 22 is closed. The intake valve 22 is provided with a valve stem 24 held by a bearing (not illustrated) and a disk-shaped valve body 26. FIG. 1 shows a cross section obtained by the cylinder head 12 being cut with a plane perpendicular to the longitudinal direction of the internal combustion engine 10 through the center of the intake valve 22. In FIG. 1, the right side of the intake valve 22 is the central side of the combustion chamber 18 and the left side of the intake valve 22 is the outer peripheral side of the combustion chamber 18. In other words, the intake port 14 is disposed such that intake air is moved from the outer peripheral side of the combustion chamber 18 toward the central side of the combustion chamber 18.

The valve seat 20 is provided with a top plate surface 28 on the side opposite to the combustion chamber 18. The top plate surface 28 is in contact with the port coarse material and is present over the entire circumference of the valve seat 20. A port surface 30 is formed at a part 29 of the valve seat 20, the part 29 abutting against the outer peripheral side of the combustion chamber 18. Hereinafter, the part abutting against the outer peripheral side will be referred to as an "outer peripheral side part" 29. In addition, a part 31 facing the outer peripheral side part 29, that is, a part abutting against the central side of the combustion chamber 18 will be referred to as a "central side part" 31 of the valve seat 20.

The port surface 30 is connected to the wall surface of the intake port 14 smoothly and without a step. Accordingly, the port surface 30 is capable of guiding the movement of the intake air without disturbing the flow of the intake air as is the case with the wall surface of the intake port 14.

The normal vector of the wall surface of the intake port 14 that is connected to the outer peripheral side of the combustion chamber 18 faces the right upward direction in FIG. 1, that is, a direction away from the combustion chamber 18. Accordingly, the normal vector of the port surface 30 of the valve seat 20 is also formed to face the direction away from the combustion chamber 18.

A seat surface 32 is formed along with the port surface 30 at the outer peripheral side part 29 of the valve seat 20. End portions of the port surface 30 and the seat surface 32 are in contact with each other, and a linear edge portion 33 is formed in the contact portion of the port surface 30 and the seat surface 32. The edge portion 33 has a steepened sharp corner. Accordingly, in a region close to the outer peripheral side of the combustion chamber 18, the wall surface guiding the movement direction of the intake air suddenly disappears in the edge portion 33. In this case, the edge portion 33 excellently functions as an end portion of a runway for the intake air. As a result, the intake air passing through the edge portion 33 is capable of continuing to move toward the central side of the combustion chamber 18 while rarely turning around to the seat surface 32 side.

The seat surface 32 is formed over the entire circumference of the valve seat 20 as well as at the outer peripheral side part 29. The seat surface 32 is formed over the entire circumference of the valve seat 20 such that the normal vector of the seat surface 32 faces the direction of the combustion chamber 18, that is, the direction of the valve body 26 of the intake valve 22.

The port surface 30 described above is formed by the inner peripheral side of the top plate surface 28 being cut along with the port coarse material. The port surface 30 is formed solely at the outer peripheral side part 29 of the valve seat 20. Accordingly, the sectional shape of the valve seat 20 is a shape that satisfies the following conditions at the outer peripheral side part 29 and the central side part 31, respectively.

### Outer Peripheral Side Part 29

The position of the edge portion 33 is the innermost peripheral side of the inner wall of the valve seat 20. Specifically, (1) the inner diameter of the valve seat 20 gradually decreases from the top plate surface 28 to the edge portion 33 and (2) the inner diameter of the valve seat 20 gradually increases from the edge portion 33 to the lower end of the seat surface 32.

### Central Side Part 31

The position abutting against the top plate surface 28 is the innermost peripheral side of the inner wall of the valve seat 20. Specifically, the inner diameter of the valve seat 20 consistently shows a decreasing tendency from the top plate surface 28 to the lower end of the valve seat 20.

In the present embodiment, a seating portion 34 of the valve body 26 is formed on the seat surface 32 of the valve seat 20. The seating portion 34 is disposed in a circular shape to be compatible with the shape of the valve body 26. The seating portion 34 has a diameter 38 slightly smaller than a diameter 36 of the valve body 26 and is formed to be concentric with a center 40 of the valve stem 24.

As described above, the valve seat 20 is formed by processing such as cutting being performed on the annular seat coarse material. Since the seat coarse material is the annular rotating body, an outer peripheral surface 42 of the valve seat 20 has a circular shape. In the present embodiment, a center 44 of the outer peripheral surface 42 of the valve seat 20 is set at a position offset by a certain distance to the port surface 30 side from the center of the valve stem 24, that is, the center 40 of the seating portion 34.

FIG. 2 shows an overall image of the cylinder head 12. FIG. 2 is a cross-sectional view obtained by the cylinder head 12 being cut with II-II plane illustrated in FIG. 1. In other words, FIG. 2 is a cross-sectional view obtained by the cylinder head 12 being cut with the same plane as the top plate surface 28 of the valve seat 20. In FIG. 2, a cut section and an observation direction for obtaining the cross section illustrated in FIG. 1 are shown in I-I arrow view for reference.

The internal combustion engine 10 according to the present embodiment has three cylinders arranged in series. Two intake valves 22 and two exhaust valves 46 are disposed for each cylinder. Each of the intake valves 22 is disposed to make a pair with each of the exhaust valves 46 across the center line (not illustrated) of the longitudinal direction of the cylinder head 12.

Although not illustrated in FIG. 2, the intake port 14 of the cylinder head 12 (refer to FIG. 1) is disposed for each intake valve 22. Each of the intake ports 14 is formed to reach the intake valve 22 from the lower side in the drawing. In other words, the intake port 14 is formed such that the intake air flows in the direction approaching the exhaust valve 46 from the side opposite to the exhaust valve 46 across the intake valve 22.

As described above, the port surface 30 and the edge portion 33 are formed at the outer peripheral side part 29 of the valve seat 20. More precisely, the port surface 30 and the edge portion 33 are formed at the part of the valve seat 20 that is positioned on the side opposite to the exhaust valve 46 as illustrated in FIG. 2. As described above, in the present embodiment, the part of the valve seat 20 that is positioned on the side opposite to the exhaust valves 46 making a pair with each other is referred to as the "outer peripheral side part" 29. Likewise, the part of the valve seat 20 that is close to the exhaust valves 46 making a pair with each other is referred to as the "central side part" 31.

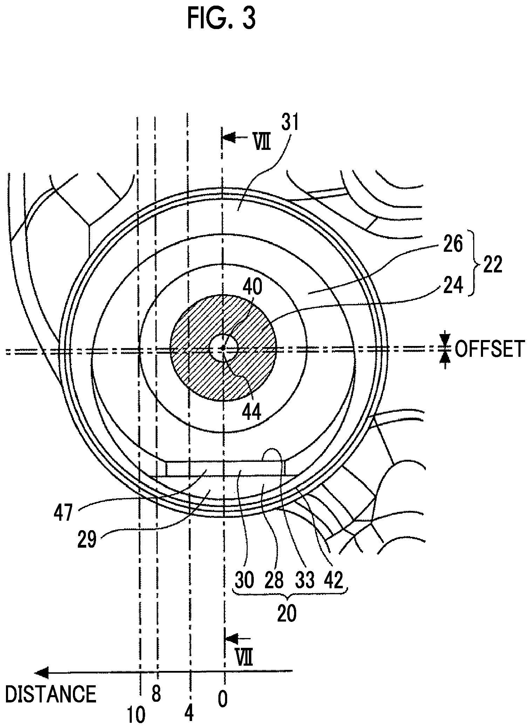

FIG. 3 is a diagram in which the cross section illustrated in FIG. 2 is shown in an enlarged manner with regard to the single intake valve 22. In FIG. 3, the valve seat 20 is drawn in a state where the top plate surface 28 is parallel to the page. The port surface 30 and the edge portion 33 are shown in the lower side in the drawing. The port surface 30 is shown in the page of FIG. 3 as well because the port surface 30 has the same inclination as the wall surface of the intake port 14 (refer to FIG. 1).

The port surface 30 includes a planar portion 47 with no curvature and curved surfaces formed on both sides of the planar portion 47. The planar portion 47 is formed to be positioned in the middle of the entire port surface 30. The edge portion 33 is disposed to include an end portion of the planar portion 47.

The wall surface of the intake port 14 is formed to be continuously connected to the port surface 30. Accordingly, a part with no curvature is also formed on the wall surface of the intake port 14 as is the case with the planar portion 47. The intake air flowing through the intake port 14 reaches the edge portion 33 of the valve seat 20 along the flat wall surfaces of the port surface 30 and the intake port 14.

When a course-guiding wall surface is curved, the intake air is likely to concentrate at the center of the curvature of the wall surface. Accordingly, when the wall surfaces of the port surface 30 and the intake port 14 connected to the port surface 30 are curved, the intake air concentrates at the centers of the curvatures of the wall surfaces. Then, the intake air is put into a state where the intake air is likely to collide with the valve stem 24 positioned at the center of the intake opening portion 16. In the configuration of the present embodiment, in contrast, the intake air can be widely dispersed to the entire planar portion 47 in front of the edge portion 33. In this case, the intake air passing through the edge portion 33 is capable of entering the combustion chamber 18 while rarely being hindered by the valve stem 24.

In FIG. 3, the intake valve 22 seated on the valve seat 20 from the back side of the page is illustrated inside the valve seat 20. In FIG. 3, the offset of the center 44 of the valve seat 20 from the center 40 of the intake valve 22 to the port surface 30 side is illustrated again.

### Generation of Tumble Flow

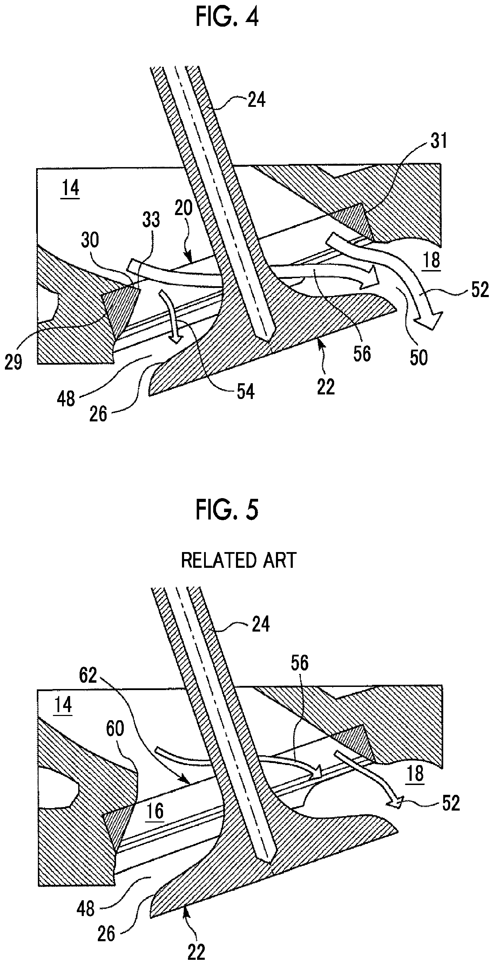

FIG. 4 is a diagram for showing the flow of the intake air in the internal combustion engine 10 according to the present embodiment. As illustrated in FIG. 4, a gap is generated between the valve seat 20 and the intake valve 22 when the intake valve 22 is opened. Hereinafter, the gap that is formed between the intake valve 22 and the outer peripheral side part 29 of the valve seat 20 will be referred to as an "outer peripheral side gap" 48. The gap that is formed between the central side part 31 and the intake valve 22 will be referred to as a "central side gap" 50.

The intake air reaching the vicinity of the central side part 31 of the valve seat 20 along the wall surface of the intake port 14 enters the combustion chamber 18 through the central side gap 50 as indicated by an arrow 52 illustrated in FIG. 4. Two intake valves 22 are disposed in one combustion chamber 18. Accordingly, the flow of the intake air as described above occurs in two lines in the combustion chamber 18. The two lines of the flow of the intake air generate a tumble flow inside the combustion chamber 18 without minimizing each other.

The intake air reaching the outer peripheral side part 29 of the valve seat 20 along the wall surface of the intake port 14 moves through the port surface 30 and the edge portion 33. At that time, the steep edge portion 33 allows the intake air to move straight by preventing wraparound of the intake air. Accordingly, as indicated by an arrow 54 in FIG. 4, the amount of the intake air heading for the outer peripheral side gap 48 after passing through the edge portion 33 is extremely small. A large portion of the intake air passing through the edge portion 33 moves straight by the valve stem 24 and flows in toward the center of the combustion chamber 18 as indicated by an arrow 56. In the present embodiment, the port surface 30 is provided with the planar portion 47 and the edge portion 33 is formed in the end portion of the port surface 30 as described with reference to FIG. 3. Accordingly, the intake air reaching the outer peripheral side part 29 is capable of escaping from the perimeter of the valve stem 24 in a widely dispersed state. Therefore, with the configuration of the present embodiment, the flow rate of the intake air flowing into the combustion chamber 18 from the outer peripheral side gap 48 can be extremely effectively reduced.

The flow of the intake air flowing in from the central side gap 50 (refer to the arrows 52, 56) generates the tumble flow in the combustion chamber 18. The flow from the outer peripheral side gap 48 indicated by the arrow 54 inhibits the tumble flow. According to the present embodiment, the flow indicated by the arrows 52, 56 can be generated in quantity and the flow indicated by the arrow 54 can be sufficiently suppressed. Accordingly, with the configuration of the present embodiment, a sufficiently large tumble flow can be generated in the combustion chamber 18 of the internal combustion engine 10.

### Improvement of Intake Efficiency

FIG. 5 shows a configuration of a comparative example to be described in contrast to the configuration of the present embodiment. The same reference numerals will be used to refer to the elements illustrated in FIG. 5 and identical or corresponding to the components illustrated in FIG. 4 and duplicate description thereof will be omitted herein.

The comparative example illustrated in FIG. 5 is provided with an edge portion 60 on the wall surface of the intake port 14. The configuration of the comparative example is substantially identical to the configuration of the present embodiment with the exception that the edge portion 60 has a different position. When the edge portion 60 is disposed on the wall surface of the intake port 14, no edge portion needs to be disposed on a valve seat 62. Accordingly, no port surface needs to be disposed on the valve seat 62 in the configuration of the comparative example.

Even in the configuration of the comparative example, the wall surface guiding the intake air flowing toward the front side of the valve stem 24 suddenly disappears in the edge portion 60. Accordingly, even in the configuration described above, the amount of the intake air wrapping around to the outer peripheral side gap 48 side can be extremely effectively reduced and the intake air is capable of entering the combustion chamber 18 mainly from the central side gap 50.

In the configuration of the comparative example, however, the edge portion 60 needs to be disposed at a position where the intake air moving straight through the edge portion 60 does not collide with the valve seat 62. Accordingly, the edge portion 60 should be disposed to be positioned further inside the inner peripheral end of the valve seat 62 (first constraint). For the edge portion 60 to be disposed in the port coarse material after the press-fit margin of the valve seat 62 is appropriately ensured, a certain degree of wall thickness needs to be ensured between the edge portion 60 and the valve seat 62. Accordingly, the edge portion 60 should be disposed at a position somewhat apart from the top plate surface of the valve seat 62 (second constraint).

The edge portion 60 illustrated in FIG. 5 shows an example of a configuration that can be formed under the first and second constraints described above. With the edge portion 60, the effective opening area of the intake port 14 is smaller than the effective opening area of the valve seat 62. The smaller the effective opening area of the intake port 14, the lower the intake efficiency of the internal combustion engine 10. Accordingly, with the configuration of the comparative example, the same intake efficiency as in the case of the first embodiment is rarely provided for the internal combustion engine.

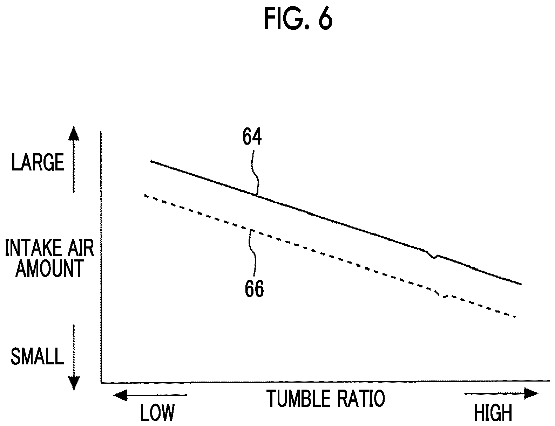

FIG. 6 is a diagram showing intake characteristics 64 of the internal combustion engine realized by the configuration of the present embodiment in contrast to intake characteristics 66 realized by the configuration of the comparative example illustrated in FIG. 5. The tumble ratio of the internal combustion engine 10 tends to decrease as the amount of the intake air increases. This tendency similarly appears in the intake characteristics 64 of the present embodiment and the intake characteristics 66 of the comparative example alike. With the configuration of the present embodiment, however, the intake characteristics 64 can be realized in which the amount of the intake air is larger and the tumble ratio is higher than in the case of the comparative example. Accordingly, the output characteristics of the internal combustion engine 10 can be significantly improved with the configuration of the present embodiment.

### Guarantee of Rigidity

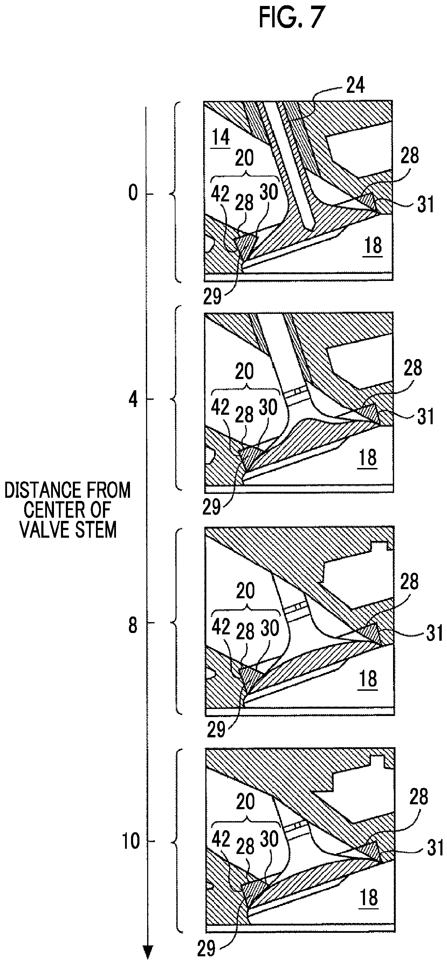

FIG. 7 is a diagram showing the cut section including the valve seat 20 at various distances from the center 40 (refer to FIG. 3) of the valve stem 24. More specifically, the four cross-sectional views illustrated in FIG. 7 are diagrams in which the cut sections along the four one-dot chain lines illustrated in FIG. 3 are respectively shown in VII-VII arrow views. Each of the numbers 0, 4, 8, and 10 illustrated in FIG. 3 and FIG. 7 represents the distance [mm] from the center 40 of the valve stem 24.

The valve seat 20 according to the present embodiment is provided with the port surface 30 solely at the outer peripheral side part 29. The port surface 30 is formed by the inner peripheral side of the top plate surface 28 being cut. No element corresponding to the port surface 30 is present at the central side part 31 of the valve seat. As described above, in the configuration of the present embodiment, the width of the top plate surface 28 of the outer peripheral side part 29 of the valve seat 20 is likely to be narrower than the width of the top plate surface 28 of the central side part 31.

In the present embodiment, the port surface 30 formed at the outer peripheral side part 29 has the planar portion 47 (refer to FIG. 3) with no curvature whereas the outer peripheral surface 42 of the valve seat 20 has a circular shape. Accordingly, as shown in the four cross-sectional views illustrated in FIG. 7, the width of the top plate surface 28 of the outer peripheral side part 29 decreases as the distance from the center 40 of the valve stem 24 increases. Accordingly, in the configuration of the present embodiment, the width of the top plate surface 28 is likely to be significantly narrower than at the other parts at a part of the outer peripheral side part 29 of the valve seat 20, in the vicinity of both end portions of the planar portion 47 of the port surface 30 to be specific.

In a case where the center 44 (refer to FIG. 3) of the outer peripheral surface 42 of the valve seat 20 is allowed to correspond to the center 40 of the valve stem 24 under the restrictions as described above, the width of the top plate surface 28 is significantly unbalanced at the outer peripheral side part 29 and the central side part 31. In this case, the rigidity of the vicinity of the valve seat 20 is likely to become insufficient at the outer peripheral side part 29.

In the present embodiment, in contrast, the center 44 of the outer peripheral surface 42 of the valve seat 20 is offset from the center 40 of the valve stem 24 to the port surface 30 side. As a result of the offset, the top plate surface 28 of the central side part 31 can be narrowed and the top plate surface 28 of the outer peripheral side part 29 can be widened. As a result, the unbalance of the outer peripheral side part 29 and the central side part 31 relating to the top plate surface 28 is eliminated. Accordingly, with the configuration of the present embodiment, adequate rigidity can be ensured for the entire valve seat 20 while the port surface 30 is disposed solely at the outer peripheral side part 29 of the valve seat 20.

### Modification Example of First Embodiment

In the first embodiment described above, each of the cylinders of the internal combustion engine 10 has two intake valves 22 and two exhaust valves 46. However, the invention is not limited thereto. The numbers of the valves can be appropriately set as needed.

## Claims

1. An internal combustion engine (10) comprising:
a cylinder head (12) provided with an intake opening portion (16) connected to a combustion chamber (18) and an intake port (14) connected to the intake opening portion (16);
an annular valve seat (20) provided with a circular seating portion (34) and a circular outer peripheral surface (42) and installed on a combustion chamber (18) side of the intake opening portion (16); and
an intake valve (22) seated on the seating portion (34) when the intake valve (22) is closed, wherein:
the valve seat (20) is provided with a port surface (30) and a seat surface (32) having end portions in contact with each other on an outer peripheral side of the combustion chamber (18) along a linear edge portion (33);
the port surface (30) is continuously connected to a wall surface of the intake port (14) and the port surface (30) has a normal vector having a direction away from the combustion chamber (18);
the seat surface (32) is formed to include the seating portion (34) and the seat surface (32) has a normal vector having a direction approaching the combustion chamber (18);
a center (44) of the outer peripheral surface (42) of the valve seat (20) is offset from a center (40) of the seating portion (34) to the port surface (30) side; and
**characterized in that**:
the port surface (30) includes a planar portion (47) with no curvature; and
the edge portion (33) includes an end portion of the planar portion (47).

## Patentansprüche

1. Verbrennungsmotor (10), umfassend:
einen Zylinderkopf (12), der mit einem Einlassöffnungsteil (16), welcher mit einer Brennkammer (18) verbunden ist, und einem Einlasskanal (14), welcher mit dem Einlassöffnungsteil (16) verbunden ist, versehen ist;
einen ringförmigen Ventilsitz (20), der mit einem kreisförmigen Aufsetzteil (34) und einer kreisförmigen Außenumfangsfläche (42) versehen ist und auf einer Brennkammer-(18)-Seite des Einlassöffnungsteils (16) installiert ist; und
ein Einlassventil (22), das auf dem Aufsetzteil (34) aufsitzt, wenn das Einlassventil (22) geschlossen ist,
wobei:
der Ventilsitz (20) mit einer Kanalfläche (30) und einer Sitzfläche (32) mit Endteilen, die auf einer Außenumfangsfläche der Brennkammer (18) entlang einem linearen Randteil (33) in Kontakt miteinander stehen, versehen ist;
die Kanalfläche (30) durchgängig mit einer Wandfläche des Einlasskanals (14) verbunden ist und die Kanalfläche (30) einen Normalvektor mit einer von der Brennkammer (18) weg verlaufenden Richtung aufweist;
die Sitzfläche (32) dahingehend ausgebildet ist, den Aufsetzteil (34) zu enthalten, und die Sitzfläche (32) einen Normalvektor aufweist, der eine sich der Brennkammer (18) nähernde Richtung aufweist;
eine Mitte (44) der Außenumfangsfläche (42) des Ventilsitzes (20) von einer Mitte (40) des Aufsetzteils (34) zu der Seite der Kanalfläche (30) versetzt ist; und
**dadurch gekennzeichnet, dass**
die Kanalfläche (30) einen planaren Teil (47) ohne Krümmung enthält; und
der Randteil (33) einen Endteil des planaren Teils (47) enthält.

## Revendications

1. Moteur à combustion interne (10), comprenant :
une culasse (12) pourvue d'une partie d'ouverture d'admission (16) connectée à une chambre de combustion (18) et un orifice d'admission (14) connecté à la partie d'ouverture d'admission (16) ;
un siège de soupape annulaire (20) pourvu d'une partie de réception circulaire (34) et d'une surface périphérique extérieure circulaire (42) et installé sur un côté de la partie d'ouverture d'admission (16) tourné vers la chambre de combustion (18) ; et
une soupape d'admission (22) disposée sur la partie de réception (34) lorsque la soupape d'admission (22) est fermée, dans lequel :
le siège de soupape (22) est pourvu d'une surface d'orifice (30) et d'une surface de siège (32) ayant des parties d'extrémité en contact l'une avec l'autre sur un côté périphérique extérieur de la chambre de combustion (18) le long d'une partie de bord linéaire (33) ;
la surface d'orifice (30) est connectée en continu à une surface de paroi de l'orifice d'admission (14) et la surface d'orifice (30) présente un vecteur normal orienté à l'écart de la chambre de combustion (18) ;
la surface de siège (32) est formée de manière à inclure la partie de réception (34) et la surface de siège (32) présente un vecteur normal orienté dans la direction de la chambre de combustion (18) ;
un centre (44) de la surface périphérique extérieure (42) du siège de soupape (20) est décalé d'un centre (40) de la partie de réception (34) vers le côté de la surface d'orifice (30) ;
et **caractérisé en ce que** :
la surface d'orifice (30) comporte une partie plane (47) sans courbure ; et
la partie de bord (33) comporte une partie d'extrémité de la partie plane (47).
